Europäisches Patentamt

(19) European Patent Office

Office européen des brevets

(11) **EP 1 115 964 B1**

(12) **EUROPÄISCHE PATENTSCHRIFT**

(45) Veröffentlichungstag und Bekanntmachung des Hinweises auf die Patenterteilung:
**26.02.2003 Patentblatt 2003/09**

(51) Int Cl.⁷: **F02D 21/08**, F02D 41/14, F02D 13/02

(21) Anmeldenummer: **99969768.3**

(22) Anmeldetag: **20.09.1999**

(86) Internationale Anmeldenummer:
**PCT/DE99/03005**

(87) Internationale Veröffentlichungsnummer:
**WO 00/019072 (06.04.2000 Gazette 2000/14)**

(54) **VERFAHREN ZUM STEUERN EINER BRENNKRAFTMASCHINE ABHÄNGIG VON EINEM ABGASDRUCK**

METHOD FOR CONTROLLING AN INTERNAL COMBUSTION ENGINE ACCORDING TO AN EXHAUST GAS PRESSURE

PROCEDE POUR COMMANDER UN MOTEUR A COMBUSTION INTERNE EN FONCTION D'UNE PRESSION DE GAZ D'ECHAPPEMENT

(84) Benannte Vertragsstaaten:
**DE FR GB**

(30) Priorität: **25.09.1998 DE 19844085**

(43) Veröffentlichungstag der Anmeldung:
**18.07.2001 Patentblatt 2001/29**

(73) Patentinhaber: **SIEMENS AKTIENGESELLSCHAFT**
**80333 München (DE)**

(72) Erfinder:
• **KOCH, Achim**
  **D-93105 Tegernheim (DE)**
• **HARTKE, Andreas**
  **D-80807 München (DE)**

(56) Entgegenhaltungen:
WO-A-97/35106          US-A- 4 453 379
US-A- 4 722 315          US-A- 5 205 260
US-A- 5 270 935

**Beschreibung**

Die Erfindung betrifft ein Verfahren zum Steuern einer Brennkraftmaschine abhängig von einem Abgasdruck, insbesondere einer Brennkraftmaschine, die Stellantriebe zum Einstellen der Last an der Brennkraftmaschine hat, die auf die Gaswechselventile der Zylinder der Brennkraftmaschine einwirken

Aus der WO 97/35106 ist ein Verfahren zum Steuern einer Brennkraftmaschine bekannt, bei dem ein Saugrohrdruck und ein Gasmassenstrom in einen Zylinder der Brennkraftmaschine bestimmt wird. Dazu ist ein dynamisches Modell des Ansaugtraktes der Brennkraftmaschine und einer externen Abgasrückführung über ein Rohr vorgesehen, das von einem Abgastrakt hin zu dem Ansaugtrakt der Brennkraftmaschine geführt ist und in dem ein Abgasrückführ-Ventil angeordnet ist. Das dynamische Modell ist aus Gleichungen für die Massenstrombilanzen im Ansaugtrakt und der Durchfluß-Gleichungen idealer Gase an Drosselstellen abgeleitet. Eingangsgrößen des dynamischen Modells sind die Meßgrößen Drehzahl und Öffnungsgrad der Drosselklappe. Ferner wird ein Abgasdruck in dem Abgastrakt zum Berechnen des Massenstroms an dem Abgasrückführ-Ventil bestimmt. Dies erfolgt durch eine betriebspunktabhängige Parametrisierung mittels eines Kennfeldes oder durch Auswerten der Signale entsprechender Sensoren.

Die Aufgabe der Erfindung ist es, ein Verfahren zum Steuern einer Brennkraftmaschine zu schaffen, das auch bei einer internen Abgasrückführung präzise und einfach ist.

Die Aufgabe wird erfindungsgemäß durch die Merkmale des unabhängigen Patentanspruchs 1 gelöst. Vorteilhafte Ausgestaltungen der Erfindung sind in den Unteransprüchen gekennzeichnet.

Die Ventilüberschneidung ist der Bereich des Kurbelwellenwinkels, in dem sowohl das Einlaßventil als auch das Auslaßventil zumindest einen Teil ihrer Strömungsquerschnitte am Einund Auslaßkanal des Zylinders freigeben. Mindestens ein Stellsignal zum Steuern eines Stellgeräts der Brennkraftmaschine wird abgeleitet von einem Abgasdruck oder ein Überwachen der Brennkraftmaschine erfolgt abhängig von dem Abgasdruck.

Ausführungsbeispiele der Erfindung sind anhand der schematischen Zeichnungen näher erläutert. Es zeigen:

Figur 1: eine Brennkraftmaschine,
Figur 2: einen Verlauf eines Ventilhubs, aufgetragen über den Kurbelwellenwinkel KW,
Figur 3: einen weiteren Verlauf eines Ventilhubs, aufgetragen über den Kurbelwellenwinkel KW,
Figur 4: ein Blockschaltbild eines dynamischen Modells der Brennkraftmaschine.

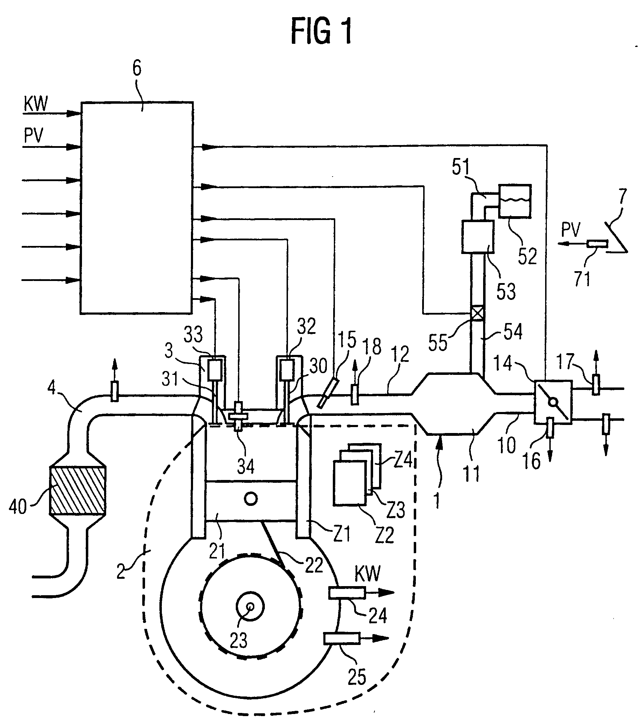

Eine Brennkraftmaschine (Figur 1) umfaßt einen Ansaugtrakt 1 mit einem Saugstutzen 10, einem Sammler 11 und einem Einlaßkanal 12. Die Brennkraftmaschine umfaßt ferner einen Motorblock 2, der den Zylinder Z1 und eine Kurbelwelle 23 aufweist. Ein Kolben 21 und eine Pleuelstange 22 sind dem Zylinder Z1 zugeordnet. Die Pleuelstange 22 ist mit dem Kolben 21 und der Kurbelwelle 23 verbunden. Ein Zylinderkopf 3 ist vorgesehen, in dem ein Ventiltrieb angeordnet ist mit mindestens einem Einlaßventil 30 und einem Auslaßventil 31. Jedem der Gaswechselventile, die als Einlaßventil 30 und als Auslaßventil 31 ausgebildet sind, ist ein Ventilantrieb 32, 33 zugeordnet. Die Ventilantriebe 32, 33 steuern den Hubbeginn, die Dauer des Hubes und somit das Hubende und ggf. den Hubbetrag des jeweiligen Gaswechselventils. Die Ventilantriebe 32, 33 sind vorzugsweise als elektromechanische Stellantriebe ausgebildet mit mindestens einem Elektromagneten, einem Anker mit einer Ankerplatte, die zwischen einer ersten Anlagefläche des Elektromagneten und einer weiteren Anlagefläche beweglich ist und die mit mindestens einem Rückstellmittel einem Feder-Masse-Schwinger bildet. Durch entsprechendes Bestromen oder Nicht-Bestromen einer Spule des Elektromagneten wird das Gaswechselventil in eine Offenposition oder eine Schließposition gebracht. Die Ventilantriebe 32, 33 können auch elektrohydraulisch oder in einer sonstigen, dem Fachmann bekannten Weise derart ausgebildet sein, daß ein zum Einstellen der Last ausreichendes Ansprechverhalten des Stellantriebs gewährleistet ist. In dem Ansaugtrakt 1 ist ein Einspritzventil 15 in dem Einlaßkanal 12 angeordnet. In dem Zylinderkopf 3 ist ferner eine Zündkerze eingebracht. Das Einspritzventil 15 kann alternativ auch derart in dem Zylinderkopf 3 angeordnet sein, daß der Kraftstoff direkt in dem Brennraum des Zylinders Z1 zugemessen wird.

Neben dem Zylinder Z1 umfaßt die Brennkraftmaschine noch weitere Zylinder Z2, Z3 und Z4, denen entsprechend ein Ein- und Auslaßventil, Ventilantriebe, Einspritzventile und Zündkerzen zugeordnet sind.

Ein Abgastrakt 4 mit einem Katalysator 40 und einer Sauerstoffsonde ist der Brennkraftmaschine zugeordnet. Ferner ist eine Tankentlüftungseinrichtung vorgesehen mit einem ersten Rohr 51, das über einen Kraftstofftank 52 mit einem Aktivkohlefilter 53, das Kraftstoffdämpfe adsorbiert und desorbiert verbunden. Das Aktivkohlefilter 53 ist über ein zweites Rohr 54 mit dem Sammler 11 verbunden. In dem zweiten Rohr 54 ist ein Tankentlüftungsventil 55 angeordnet, das durch Vorgabe eines Tastverhältnisses $TV_{TEV}$ angesteuert wird.

Eine Steuereinrichtung 6 ist vorgesehen, der Sensoren zugeordnet sind, die verschiedene Meßgrößen erfassen und jeweils den Meßwert der Meßgröße ermitteln. Die Steuereinrichtung 6 ermittelt abhängig von mindestens einer Meßgröße Stellsignale zum Steuern der Ventilantriebe 32, 33, des Einspritzventils 15, der Zündkerze 34 und des Tankentlüftungsventils 55.

Die Sensoren sind ein Pedalstellungsgeber 71, der eine Pedalstellung PV des Fahrpedals 7 erfaßt, ein Positionssensor 16, der einen Öffnungsgrad $\alpha_{DK}$ der Drosselklappe 14 erfaßt, ein Luftmassenmesser 17, der einen Luftmassenstrom $\dot{m}_L$ erfaßt, ein erster Temperatursensor 18, der eine Temperatur $T_{L1}$ des von dem Zylinder Z1 angesaugten Gasgemisches erfaßt, ein Kurbelwellenwinkel-Geber 24, der einen Kurbelwellenwinkel KW erfaßt, aus dessen zeitlichen Verlauf in der Steuereinrichtung 6 die Drehzahl N der Kurbelwelle 23 berechnet wird, ein zweiter Temperatursensor 25, der eine Kühlmitteltemperatur $T_{KUEL}$ erfaßt. Je nach Ausführungsform der Erfindung kann eine beliebige Untermenge der genannten Sensoren oder auch zusätzliche Sensoren vorhanden sein. Der erste Temperatursensor 18 kann beispielsweise auch stromaufwärts der Drosselklappe 14 angeordnet sein.

Die Steuereinrichtung 6 ist vorzugsweise als elektronische Motorsteuerung ausgebildet. Sie kann jedoch auch mehrere Steuergeräte umfassen, die elektrisch leitend miteinander verbunden sind, so z. B. über ein Bussystem.

Ein physikalisches Modell der Brennkraftmaschine ist in der Steuereinrichtung 6 gespeichert und wird von dieser abgearbeitet. Ein Saugrohrdruck $p_S$ in dem Ansaugtrakt und ein Gasmassenstrom $\dot{m}_{zyl}$ in den Zylinder Z1 werden mittels dieses Modells berechnet. Das dynamische Modell wird im folgenden erläutert. Für den Saugrohrdruck $p_S$ läßt sich folgende Differentialgleichung aus der Zustandsgleichung idealer Gase, also der Massenstrombilanz aufstellen:

$$\dot{p}_S = \frac{RT_{L,1}}{V_S} \left( \dot{m}_{DK} + \dot{m}_{TEV} + \dot{m}_{AGR} - \dot{m}_{zyl} \right) \tag{F1}$$

Dabei bezeichnet R die allgemeine Gaskonstante, $V_S$ das Volumen des Ansaugtraktes stromabwärts der Drosselklappe 14, $T_{L,1}$ die Temperatur des vom Zylinder angesaugten Gasgemisches, $\dot{m}_{DK}$ den Luftmassenstrom an der Drosselklappe, $\dot{m}_{TEV}$ den Massenstrom an dem Tankentlüftungsventil 55, $\dot{m}_{AGR}$ den aus interner Abgasrückführung resultierenden Massenstrom und $\dot{m}_{zyl}$ den Gasmassenstrom in den Zylinder Z1.

Für eine zeitdiskrete Darstellung der Beziehung (F1) wird ein Ansatz nach der Trapezintegration gemacht. Alternativ kann jedoch auch ein beliebiges anderes zeitdiskretes Integrationsverfahren, wie z. B. das Euler-Verfahren, eingesetzt werden. Ein Index i kennzeichnet jeweils den Wert der jeweiligen Größe im aktuellen Berechnungszyklus, ein Index i-1 kennzeichnet jeweils den Wert der jeweiligen Größe aus dem letzten Berechnungszyklus.

Mit dem Ansatz der Trapezintegration ergibt sich für den Saugrohrdruck $p_{S,i}$ im aktuellen Berechungszyklus die Beziehung:

$$p_{s,i} = p_{S,i-1} + \frac{t_A}{2} \left( \dot{p}_{s,i-1} + \dot{p}_{s,i} \right) \tag{F2}$$

wobei $\dot{p}_S$ die zeitliche Ableitung des Saugrohrdrucks ist und $t_A$ die Abtastzeit ist, d. h. die Zeitdauer von einem Beginn eines Berechnungszyklusses bis zum Beginn des nächsten Berechnungszyklusses.

Für die Abtastzeit $t_A$ wird vorzugsweise die Segmentzeit $t_{SEG}$ vorgegeben, die gegeben ist durch

$$t_{SEG} = \frac{1}{N \cdot Z} \tag{F3}$$

wobei Z die Zylinderzahl und N die Drehzahl ist.

Die Beziehung (F1) eingesetzt eingesetzt in (F2) ergibt

$$p_{S,i} = p_{s,i-1} + \frac{t_A}{2} \dot{p}_{S,i-1} + \frac{t_A}{2} \frac{RT_{L,1}}{V_S} \left( \dot{m}_{DK} + \dot{m}_{TEV} + \dot{m}_{AGR} - \dot{m}_{zyl} \right) \tag{F4}$$

Der Luftmassenstrom $\dot{m}_{DK}$ an der Drosselklappe 14 wird aus der Durchflußgleichung idealer Gase durch Drosselstellen abgeleitet. Demnach gilt

$$\dot{m}_{DK} = A_{DK} \sqrt{\frac{2\kappa}{\kappa-1} \frac{1}{RT_{L,0}}} \psi_{DK} p_0 \tag{F5}$$

mit

$$\sqrt{\left(\frac{p_{S,i}}{p_0}\right)^{\frac{2}{\kappa}} - \left(\frac{p_{S,i}}{p_0}\right)^{\frac{\kappa+1}{\kappa}}} \tag{F6}$$

für unterkritische Druckverhältnisse und

$$\sqrt{p_{q,krit}^{\frac{2}{\kappa}} - p_{q,krit}^{\frac{\kappa+1}{\kappa}}} \tag{F7}$$

für kritische Druckverhältnisse. Dabei bezeichnet $A_{DK}$ den Strömungsquerschnitt an der Drosselklappe 14, $\kappa$ den Adiabaten-Exponenten ($\kappa$ ist z. B. 1,4), $\Psi_{DK}$ die Durchflußfunktion für die Drosselklappe, $p_0$ den Umgebungsdruck und $p_{q,krit}$ ein kritisches Druckverhältnis zwischen dem Saugrohrdruck $p_S$ und dem Umgebungsdruck $p_0$ (z.B. $p_{q,krit} = 0,52$).

Für den Massenstrom $\dot{m}_{TEV}$ am Tankentlüftungsventil 55 gilt:

$$\dot{m}_{TEV} = A_{TEV}\sqrt{\frac{2\kappa}{\kappa-1}\frac{1}{RT_{L,0}}}\,\psi_{TEV}p_0 \tag{F8}$$

wobei $A_{TEV}$ der Strömungsquerschnitt am Tankentlüftungsventil 55 ist und $TV_{TEV}$ das Tastverhältnis am Tankentlüftungsventil 55 ist.

Falls bevorzugt ein elektromechanischer Ventilantrieb 32, 33 eingesetzt wird, so gewährleisten entsprechende Funktionen in der Steuereinrichtung 6, daß Bauteilstreuungen der Ventilantriebe 32, 33 mit einer so ausreichenden Güte kompensiert werden, daß der von dem Zylinder Z1 angesaugte Gasmassenstrom $\dot{m}_{zyl}$ abhängig von einem Soll-Mengenstrom $\dot{V}_{zyl}$ in den Zylinder Z1 ermittelt werden kann. Demnach ergibt sich die Beziehung

$$\dot{m}_{zyl} = \dot{V}_{zyl}\,\frac{p_S}{RT_{L,1}} \tag{F9}$$

Eine interne Abgasrückführung erfolgt durch entsprechendes Einstellen der Ventilüberschneidung, die definiert ist als der Bereich des Kurbelwellenwinkels KW, in dem sowohl das Einlaßventil 30 als auch das Auslaßventil 31 zumindest einen Teil ihrer Strömungsquerschnitte am Ein- und Auslaßkanals des Zylinders freigeben. Bei interner Abgasrückführung strömt ein Teil des Abgases zurück in den Ansaugtrakt 1 und wird dann im folgenden Ansaugtakt wieder in den Brennraum des Zylinders Z1 angesaugt. Falls ein Druckgefälle von dem Abgastrakt 4 hin zu dem Zylinder Z1 und weiter hin zu dem Ansaugtrakt 1 besteht, so strömt auch Abgas von dem Abgastrakt 4 zurück in den Zylinder Z1 und von dort in den Ansaugtrakt 1.

Der aus interner Abgasrückführung resultierende Massenstrom $\dot{m}_{AGR}$ hängt wesentlich ab von einem Winkelabschnitt $\varphi_{VUE}$ der Ventilüberschneidung, der bezogen ist auf den Kurbelwellenwinkel KW ist und in dem sowohl das Einlaßventil 30 als auch das Auslaßventil 31 zumindest einen Teil ihrer Strömungsquerschnitte am Ein- und Auslaßkanal des Zylinders Z1 freigeben.

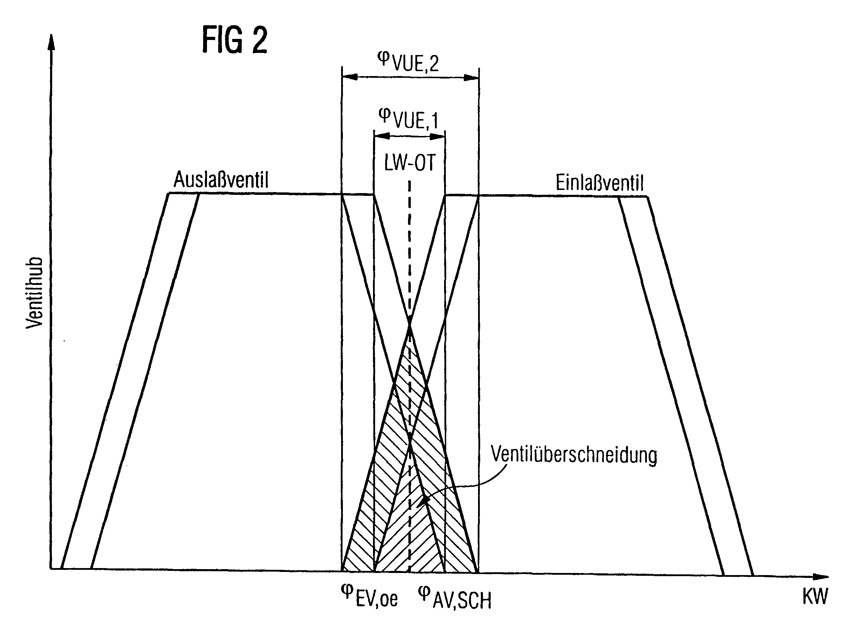

Figur 2 zeigt eine schematische Darstellung des Ventilhubs des Auslaßventils 31 und des Einlaßentils 30 für zwei verschiedene Steuerzeiten der Einlaß- und Auslaßventile aufgetragen über den Kurbelwellenwinkel KW. $\varphi_{EV,oe}$ ist der Öffnungswinkel des Einlaßventils 30, d. h. der Kurbelwellenwinkel KW, bei dem das Einlaßventil 30 zu öffnen beginnt. $\varphi_{AV,SCH}$ ist der Schließwinkel des Auslaßventils 31, d. h. der Kurbelwellenwinkel KW, bei dem das Auslaßventil 31 geschlossen ist.

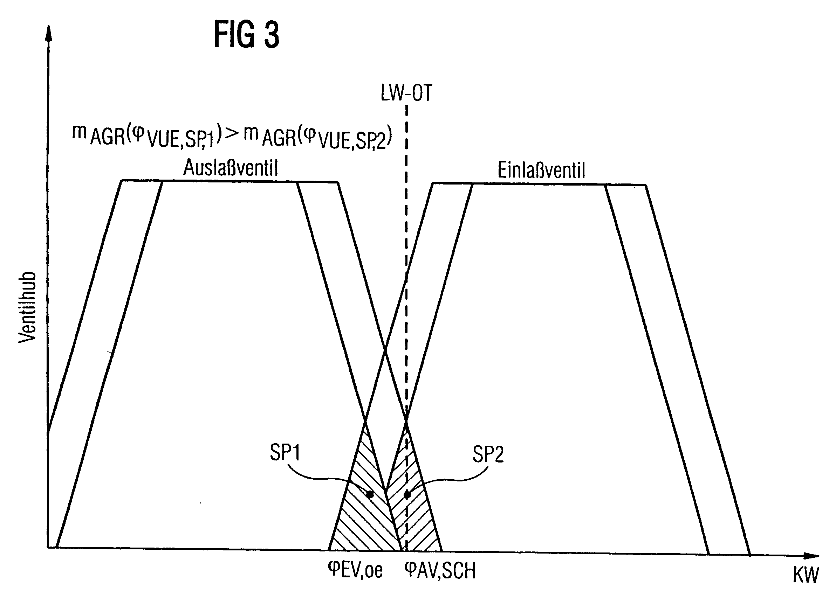

LW-OT bezeichnet den oberen Totpunkt des Kolbens des Zylinders Z1 bei Ladungswechsel. $\varphi_{VUE,1}$ ist ein erster Wert des Winkelabschnitts $\varphi_{VUE}$ und $\varphi_{VUE,2}$ ist ein zweiter Wert des Winkelabschnitts $\varphi_{VUE}$. Neben dem Wert des Winkelabschnitts $\varphi_{VUE}$ ist die Lage des Winkelabschnitts $\varphi_{VUE}$ bezogen auf den oberen Totpunkt LW-OT des Kolbens bei Ladungswechsel wesentlich fürden aus interner AGR-resultierende Massenstrom $\dot{m}_{AGR}$. Dies ist anhand der Figur 3 verdeutlicht. SP1 bezeichnet den Flächenschwerpunkt bei einem ersten Beispiel der Ventilsteuerzeiten der Ventilüberschneidung und SP2 bezeichnet den Flächenschwerpunkt der Ventilüberschneidung für ein zweites Beispiel der Ventilsteuerzeiten. Da der Schwerpunkt SP1 vor dem oberen Totpunkt LW-OT des Kolbens bei Ladungswechsel liegt und der Schwerpunkt SP2 mit in dem oberen Totpunkt LW-OT zusammenfällt, ist die in dem zweiten Fall zurückgeführte Abgasmasse $\dot{m}_{AGR}$ ($\varphi_{VUE,SP2}$) kleiner als die im ersten Fall zurückgeführte Abgasmasse $\dot{m}_{AGR}$ ($\varphi_{VUE,SP1}$).

Der aus interner Abgasrückführung resultierende Massenstrom $\dot{m}_{AGR}$ wird aus der Durchflußgleichung idealer Gase durch Drosselstellen abgeleitet. Es gilt:

$$\dot{m}_{AGR} = A_{EV}\sqrt{\frac{2\kappa}{\kappa-1}\frac{1}{RT_{AG}}}\psi_{AG}p_{AG} \qquad\qquad\text{(F10)}$$

mit

$$\sqrt{\left(\frac{p_{AG}}{p_{S,i}}\right)^{\frac{2}{\kappa}} - \left(\frac{p_{AG}}{p_{S,i}}\right)^{\frac{\kappa+1}{\kappa}}} \qquad\qquad\text{(F11)}$$

für unterkritische Druckverhältnisse und

$$\sqrt{p_{q,krit}^{\frac{2}{\kappa}} - p_{q,krit}^{\frac{\kappa+1}{\kappa}}} \qquad\qquad\text{(F12)}$$

für überkritische Druckverhältnisse, wobei $A_{EV}$ der Strömungsquerschnitt an dem Einlaßventil 30 ist, $T_{AG}$ die Abgastemperatur ist, $p_{AG}$ der Abgasdruck in dem Zylinder Z1 während der Ventilüberschneidung ist und $\psi_{AG}$ die Durchflußfunktion an dem Einlaßventil 30 ist. Der freie Strömungsquerschnitt $A_{EV}$ an dem Einlaßventil 30 während der Ventilüberschneidung wird hauptsächlich durch die Dauer der gleichzeitigen Öffnung des Ein- und Auslaßventils 30, 31 bestimmt. Je größer der Winkelabschnitt $\varphi_{VUE}$ der Ventilüberschneidung ist, desto größer ist der Strömungsquerschnitt $A_{EV}$ an dem Einlaßventil 30. Bei einem gleichen Winkelabschnitt $\varphi_{VUE}$ der Ventilüberschneidung wird durch ein Verschieben eines Schwerpunktwinkels $\varphi_{VUE,SP}$ der Ventilüberschneidungsfläche (siehe Figur 3) bezogen auf den oberen Totpunkt LW-OT in Richtung des Abgastaktes die rückströmende Abgasmasse verringert.

Setzt man die Beziehung (F5), (F8), (F9), (F10) in (F4) ein und setzt $\Psi_{DK} = \Psi_{TEV} = \Psi$, so ergibt sich daraus folgende Beziehung für den Saugrohrdruck $p_S$:

$$p_{S,i} = p_{S,i-1} + \frac{t_A}{2}\dot{p}_{S,i-1} + \frac{t_A}{2}\frac{RT_{L,1}}{V_S}$$

$$\left( A_{DK}\sqrt{\frac{2\kappa}{\kappa-1}\frac{1}{RT_{L,0}}}\psi p_0 + A_{TEV}\sqrt{\frac{2\kappa}{\kappa-1}\frac{1}{RT_{L,0}}}\psi p_0 - \dot{V}_{zyl}\frac{p_{S,i}}{RT_{L,1}} + A_{EV}\sqrt{\frac{2\kappa}{\kappa-1}\frac{1}{RT_{AG}}}\psi_{AG}p_{AG,i} \right)$$

(F13)

mit den Abkürzungen

$$C_0 = \frac{RT_{L,1}}{V_S} \qquad\qquad\text{(F14)}$$

$$C_1 = \sqrt{\frac{2\kappa}{\kappa-1}\frac{1}{RT_{L,0}}}\, p_0 \qquad\qquad\text{(F15)}$$

$$C_2 = \frac{1}{RT_{L,1}} \qquad\qquad\text{(F16)}$$

$$C_3 = \sqrt{\frac{2\kappa}{\kappa-1}\frac{1}{RT_{AG}}} \qquad\qquad\text{(F17)}$$

ergibt sich:

$$p_{S,i} = p_{S,i-1} + \frac{t_A}{2}\dot{p}_{S,i-1} + \frac{t_A}{2}C_0\left(\left(A_{DK} + A_{TEV}\right)C_1\psi - \dot{V}_{zyl}C_2 p_{S,i} + A_{EV}C_3\psi_{AG}p_{AG,i}\right) \quad (F18)$$

Wird (F18) nach dem Saugrohrdruck $p_S$ aufgelöst, so ergibt sich die rekursive Modellgleichung:

$$p_{S,i} = \frac{p_{S,i-1} + \frac{t_A}{2}\dot{p}_{S,i-1} + \frac{t_A}{2}C_0\left(C_1\psi\left(A_{DK} + A_{TEV}\right) + A_{EV}C_3\psi_{AG}\right)}{1 + \frac{t_A}{2}\dot{V}_{zyl}/V_S} \quad (F19)$$

Für die zeitliche Ableitung $\dot{p}_S$ des Saugrohrdrucks kann näherungsweise angesetzt werden

$$\dot{p}_{S,i-1} = p_{S,i-1} - p_{S,i-1} \quad (F20)$$

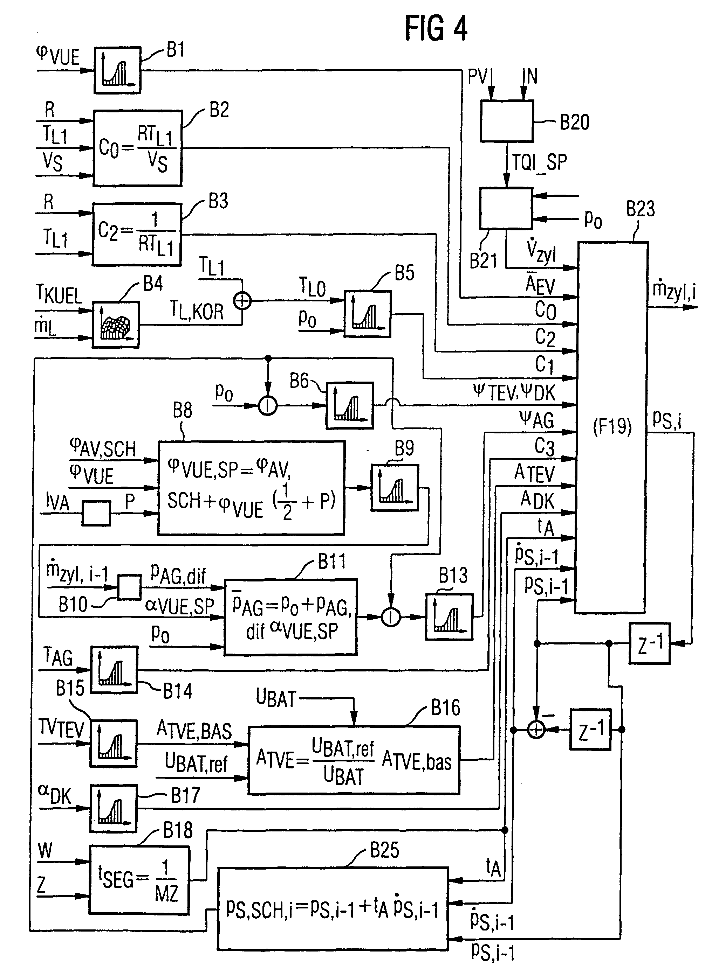

In Figur 4 ist ein Blockschaltbild dargestellt zum Ermitteln des Saugrohrdrucks $p_S$ und des Gasmassenstroms $\dot{m}_{zyl}$ in dem Zylinder mittels des Modells der Brennkraftmaschine. Ein entsprechendes Programm ist in der Steuereinrichtung 6 gespeichert und wird dort abgearbeitet. In einem Block B1 wird ein mittlerer Strömungsquerschnitt $\bar{A}_{EV}$ am Einlaßventil 30 während der Ventilüberschneidung aus einem Kennfeld abhängig von dem Winkelabschnitt $\varphi_{VUE}$ der Ventilüberschneidung, der vorgegeben ist, ermittelt. Das Kennfeld ist durch Messungen an einem Motorprüfstand vorab ermittelt. So kann der mittlere Strömungsquerschnitt $\bar{A}_{EV}$ einfach ermittelt werden, da der Winkelabschnitt $\varphi_{VUE}$ der Ventilüberschneidung vorgegeben ist. In einem Block B2 wird der Wert $C_0$ gemäß der Beziehung (F14) abhängig von der allgemeinen Gaskonstanten R, der Temperatur $T_{L1}$ des von dem Zylinder angesaugten Gasgemisches und dem Volumen $V_S$ des Ansaugtraktes 1 stromaufwärts der Drosselklappe 14 ermittelt. In einem Block B3 wird der Wert $C_2$ entsprechend der Beziehung (F16) abhängig von der allgemeinen Gaskonstanten und der Temperatur $T_{L1}$ des von dem Zylinder angesaugtem Gasgemisches ermittelt.

In einem Block B4 ist ein Kennfeld vorgesehen, aus dem eine Korrekturtemperatur $T_{L,Kor}$ ermittelt wird und zwar abhängig von der Kühlmitteltemperatur $T_{kuel}$ und dem Luftmassenstrom $\dot{m}_L$ an dem Luftmassenmesser 17. Das Kennfeld des Blocks B4 ist dabei durch Messungen an einem Motorprüfstand so bestimmt, daß die Summe der Korrekturtemperatur $T_{L,Kor}$ und der Temperatur $T_{L1}$ des von dem Zylinder Z1 angesagten Gasgemisches die Ansauglufttemperatur $T_{L0}$ im Bereich der Drosselklappe 14 ergibt.

In einem Block B5 wird der Wert $C_1$ aus einem Kennfeld abhängig von der Ansauglufttemperatur $T_{L0}$ und einem Umgebungsdruck $p_0$, der entweder als Meßwert eines Umgebungsdrucksensors vorliegt oder der in den vorgegebenen Betriebszuständen - z.B. bei vollständig geöffneter Drosselklappe 14 - aus dem Saugrohrdruck $p_S$ ermittelt wird. Die Beziehung (F15) ist in dem Kennfeld des Blocks B5 abgebildet.

In einem Block B6 wird die Durchflußfunktion $\Psi$, die gleich ist den Durchflußfunktionen $\psi_{DK}$ und $\psi_{TEV}$ an der Drosselklappe 14 und dem Tankentlüftungsventil 55, aus einer Kennlinie ermittelt und zwar abhängig von dem Umgebungsdruck $p_0$ und dem Verhältnis eines Näherungswertes $p_{S,SCH,i}$ des Saugrohrdruckes $p_S$ des aktuellen Berechnungszyklusses, der weiter unten näher erläutert wird.

In dem Block B6 ist die Beziehung (F6) durch eine entsprechende Kennlinie ersetzt.

Statt eines Abgasdrucks $p_{AG}$ wird ein mittlerer Abgasdruck $\bar{p}_{AG}$ während der Ventilüberschneidung ermittelt, um so Rechenzeit zu sparen. Der mittlere Abgasdruck $\bar{p}_{AG}$ ergibt sich aus der folgenden Beziehung:

$$\bar{p}_{AG} = p_0 + p_{AG,dif}\alpha_{VUE,SP} \quad (F21)$$

Der Differenzdruck $p_{AG,Dif}$ wird einer Kennlinie entnommen, in der Werte des Differenzdrucks $p_{AG,Dif}$ durch die Verbrennung des Luft-Kraftstoff-Gemisches in dem Zylinder abhängig von dem in dem vorangegangenen Berechnungszyklus berechneten Gasmassenstrom $\dot{m}_{zyl}$ in den Zylinder Z1 aufgetragen sind. Ein Korrekturfaktor $\alpha_{VUE,SP}$ ist vorgesehen zur Korrektur des mittleren Abgasdrucks $\bar{p}_{AG}$ in dem Zylinder Z1 während der Ventilüberschneidung abhängig von einem Schwerpunktwinkel $\varphi_{VUE,SP}$ der Ventilüberschneidung.

Der Schwerpunktwinkel $\varphi_{VUE,SP}$ der Ventilüberschneidung wird in einem Block B8 abhängig von einem Schließwinkel $\varphi_{AV,SCH}$ des Auslaßventils 31, dem Winkelabschnitt $\varphi_{VUE}$ der Ventilüberschneidung und einem Korrekturwert P ermittelt. Der Schließwinkel $\varphi_{AV,SCH}$ ist der auf den Kurbelwellenwinkel KW bezogene Winkel, bei dem das Auslaßventil 31 gerade geschlossen ist. Der Korrekturwert P kann einfacherweise fest vorgegeben sein oder auch abhängig von einer die Schließgeschwindigkeit der Ein- oder Auslaßventile beeinflussende Größe ermittelt werden, die vorzugsweise ein Strom $I_{VA}$ durch den Ventilantrieb ist. Dadurch wird berücksichtigt, daß abhängig von der Amplitude des Stroms $I_{VA}$ durch den Ventilantrieb 31, 33 die Schließ- oder Öffnungsgeschwindigkeit der Auslaß- oder Einlaßventile wesentlich beeinflußt wird. Der Schwerpunktwinkel $\varphi_{VUE,SP}$, wird in dem Block B8 mit der Beziehung (F23), die im folgenden angegeben ist, ermittelt:

$$\varphi_{VUE,SP} = \varphi_{AV,SCH} + \varphi_{VUE}\left(\frac{1}{2} + P\right) \qquad \text{(F23)}$$

Die Beziehung (F23) ergibt sich unter der Annahme, daß die Ventilhübe des Einlaßventils 30 und des Auslaßventils 31 aufgetragen über den Kurbelwellenwinkel während der Ventilüberschneidung ein Dreieck bilden und unter Anwendung der Formel zum Berechnen des Schwerpunktes eines Dreiecks, dem Strahlensatz, der Annahme, daß die Bewegungsgeschwindigkeiten der Ein- und Auslaßventile 30, 31 bekannt sind und in einem festen Verhältnis zueinander stehen. So kann in dem Block B8 mit einem geringen Rechenaufwand der Schwerpunktwinkel $\varphi_{VUE,SP}$ der Ventilüberschneidung präzise ermittelt werden.

In einem Block B9 wird dann der Korrekturfaktor $\alpha_{VUE,SP}$ aus einem Kennfeld ermittelt. In einem Block B10 wird der Differenzdruck $p_{AG,Dif}$ abhängig von dem Gasmassenstrom $\dot{m}_{zyl,j-1}$ des letzten Berechnungszyklus ermittelt. So wird mit wenig Rechenaufwand ein ausreichend genauer Schätzwert des allein durch die Verbrennung des Luft/Kraftstoff-Gemisches im Zylinder bewirkten Abgasdrucks ermittelt.

In einem Block B11 wird dann der mittlere Abgasdruck $\bar{p}_{AG}$ in dem Zylinder Z1 während der Ventilüberschneidung gemäß der Beziehung (F21) ermittelt. In einem Block B13 ist in einer Kennlinie die Beziehung (F11) abhängig von dem Verhältnis des mittleren Abgasdrucks $\bar{p}_{AG}$ und des Näherungswertes $p_{S,SCH,i}$ des Saugrohrdrucks $p_S$ des aktuellen Berechnungszyklusse aufgetragen. So wird in dem Block B13 die Durchflußfunktion $\psi_{AG}$ am Einlaßventil 30 ermittelt.

In einem Block B14 wird der Wert $C_3$ gemäß der Beziehung (F17) abhängig von einer Abgastemperatur $T_{AG}$ aus einer Kennlinie ermittelt. Zum Ermitteln der Abgastemperatur $T_{AG}$ ist entweder ein Temperatursensor in dem Abgastrakt vorgesehen oder ein Schätzwert der Abgastemperatur $T_{AG}$ wird abhängig von dem in dem letzten Berechnungszyklus ermittelten Gasmassenstrom $\dot{m}_{zyl1}$ in dem Zylinder Z1 ermittelt.

In einem Block B15 wird ein Basis-Strömungsquerschnitt $A_{TEV,bas}$ an dem Tankentlüftungsventil 55 aus einem Kennfeld ermittelt . In einem Block B16 wird dann ein Strömungquerschnitt $A_{TVE}$ an dem Tankentlüftungsventil 55 abhängig von dem Basis-Strömungsquerschnitt $A_{TVE,bas}$ an dem Tankentlüfungsventil 55, einer Bordnetzspannung $U_{BAT}$ und einem Referenzwert $U_{BAT,ref}$ der Bordnetzspannung $U_{BAT}$ ermittelt und zwar gemäß einer Beziehung

$$A_{TVE} = \frac{U_{BAT,ref}}{U_{BAT}}\, A_{TVE,bas} \qquad \text{(F24)}$$

In dem Block B16 wird so der Strömungsquerschnitt $A_{TVE}$ an dem Tankentlüftungsventil 55 sehr präzise ermittelt, da er stark abhängt von der tatsächlichen Bordnetzspannung $U_{BAT}$. Der Basisströmungsquerschnitt $A_{TVE,bas}$ ist ermittelt für den Referenzwert $U_{BAT,ref}$ der Bordnetzspannung $U_{BAT}$.

In einem Block B17 wird der Strömungsquerschnitt $A_{DK}$ an der Drosselklappe 14 abhängig von dem Öffnungsgrad $\alpha_{DK}$ aus einer Kennlinie ermittelt.

In einem Block B18 wird eine Segmentzeitdauer $t_{seg}$, abhängig von der aktuellen Drehzahl N und der Anzahl Z der Zylinder-Brennkraftmaschine gemäß der Beziehung (F3) ermittelt. Die Abtastzeit $t_A$ wird gleichgesetzt mit der Segmentzeitdauer $t_{SEG}$ und bestimmt damit den Berechnungszyklus.

In einem Block B20 wird eine die Last an der Brennkraftmaschine repräsentierende Größe ermittelt. Diese Größe ist vorzugsweise ein Sollwert TQI_SP des Drehmoments, der abhängig von der Fahrpedalstellung PV und der Drehzahl und weiteren Drehmomentanforderungen von Motorbetriebsfunktionen oder beispielsweise einer elektronischen Getriebesteuerung ermittelt wird. In einem Block B21 wird abhängig von dem Umgebungsdruck $p_0$, der Temperatur $T_{L1}$ des von dem Zylinder Z1 angesaugten Gasgemisches und dem Sollwert TQI_SP des Drehmoments ein Soll-Mengenstrom $\dot{V}_{zyl}$ in den Zylinder Z1 ermittelt.

In einem Block B23 erfolgt das Berechnen des Saugrohrdrucks $p_S$, des aktuellen Berechnungszyklusses mit der Formel gemäß der Beziehung (F19) und das Berechnen des Gasmassenstroms $\dot{m}_{zyl}$ in den Zylinder Z1 mit der Formel gemäß der Beziehung (F9).

Abhängig von dem Gasmassenstrom $\dot{m}_{zyl,i}$ wird dann beispielsweise eine Einspritzzeit berechnet und werden entsprechende Ansteuersignale für das Einspritzventil 15 von der Steuereinrichtung 6 erzeugt. Ein Block B25 ist vorgesehen, in dem der Näherungswert $p_{S,SCH,i}$ des Saugrohrdrucks $p_S$ mittels eines numerischen Integrationsverfahren, beispielsweise des Euler-Verfahrens, aus dem Saugrohrdruck $p_{S,i-1}$ des vorangegangenen Berechnungszyklus, der zeitlichen Ableitung $\dot{p}_{S,i-1}$ des Saugrohrdrucks des vorangegangenen Berechnungszyklus und der Abtastzeit $t_A$ berechnet wird.

**Patentansprüche**

1. Verfahren zum Steuern einer Brennkraftmaschine abhängig von einem Abgasdruck mit einem Ansaugtrakt (1), mindestens einem Zylinder (Z1), einem Abgastrakt (4) und Ein- und Auslaßventilen (30, 31), die dem Zylinder (Z1) zugeordnet sind, bei dem der Abgasdruck($p_{AG}$) in dem Zylinder (Z1) während der eine interne Abgasrückführung hervorrufenden Ventilüberschneidung der insbesondere mit elektromechanischen Stellantrieben versehenen Ein- und Auslaßventile (30, 31) abhängig von

   - einem Schätzwert eines Abgasdrucks ($p_{AG}$), der durch die Verbrennung eines Luft/Kraftstoff-Gemisches im Zylinder (Z1) bewirkt ist, und
   - einer Größe, die den Flächenschwerpunkt der Ventilüberschneidung der Ein- und Auslaßventile (30, 31) charakterisiert, ermittelt wird, wobei der Flächenschwerpunkt bezogen ist auf eine Fläche, durch die sich überschneidenden Ventilhübe der Ein- und Auslaßventile (30, 31) bezogen auf den Kurbelwellenwinkel (KW) ergibt.

2. Verfahren nach Anspruch 1, **dadurch gekennzeichnet, daß** der Schätzwert des Abgasdrucks, der durch die Verbrennung des Luft/Kraftstoff-Gemisches im Zylinder bewirkt ist, abhängt von einem Gasmassenstrom ($\dot{m}_{zyl}$) in den Zylinder (Z1).

3. Verfahren nach einem der vorhergehenden Ansprüche, **dadurch gekennzeichnet, daß** die den Flächenschwerpunkt der Ventilüberschneidung der Ein- und Auslaßventile (30, 31) charakterisierende Größe der Schwerpunktwinkel ($\varphi_{VUE,SP}$) des Flächenschwerpunkts der Ventilüberschneidung bezogen auf den Kurbelwellenwinkel (KW) ist.

4. Verfahren nach Anspruch 3, **dadurch gekennzeichnet, daß** der Schwerpunktwinkel ($\varphi_{VUE,SP}$) abhängt von einem Schließwinkel $\varphi_{AV,SCH}$) des Auslaßventils, dem Winkelabschnitt ($\varphi_{VUE}$) der Ventilüberschneidung und einem vorgegebenen Korrekturwert (P).

5. Verfahren nach Anspruch 4, **dadurch gekennzeichnet, daß** der Korrekturwert (T) abhängt von einer die Schließgeschwindigkeit oder die Öffnungsgeschwindigkeit der Ein- oder Auslaßventile (30, 31) beeinflussenden Größe.

6. Verfahren nach einem der vorhergehenden Ansprüche, **dadurch gekennzeichnet, daß** ein aus interner Abgasrückführung resultierender Massenstrom ($\dot{m}_{AGR}$) abhängig von dem Abgasdruck ($p_{AG}$) und einem Saugrohrdruck ($p_S$) in dem Ansaugtrakt (1) ermittelt wird.

7. Verfahren nach Anspruch 6, **dadurch gekennzeichnet, daß** der aus interner Abgasrückführung resultierende Massenstrom ($\dot{m}_{AGR}$) abhängig von einem mittleren Strömungsquerschnitt ($\bar{A}_{EV}$) an dem Einlaßventil (30) des Zylinders (Z1) während der Ventilüberschneidung ermittelt wird.

8. Verfahren nach Anspruch 7, **dadurch gekennzeichnet, daß** der mittlere Strömungsquerschnitt ($\bar{A}_{EV}$) abhängt von dem Winkelabschnitt ($\varphi_{VUE}$) der Ventilüberschneidung.

9. Verfahren nach einem der Ansprüche 6 bis 8, **dadurch gekennzeichnet, daß** der Massenstrom in den Zylinder (Z1) mittels eines dynamischen Modells der Brennkraftmaschine abhängig von dem aus interner Abgasrückführung resultierenden Massenstrom ($\dot{m}_{AGR}$), und mindestens den Meßgrößen Öffnungsgrad ($\alpha_{DK}$) einer Drosselklappe (14) in dem Ansaugtrakt (1) und Drehzahl (N) der Kurbelwelle (23) ermittelt wird.

10. Verfahren nach einem der vorhergehenden Ansprüche, **dadurch gekennzeichnet, daß** der Abgasdruck ($p_{AG}$) abhängt von einem Umgebungsdruck ($p_0$).

**Claims**

1. Method for controlling an internal combustion engine depending on an exhaust gas pressure with an induction tract (1), at least one cylinder (Z1), an exhaust gas tract (4) and inlet and outlet valves (30, 31) that are allocated to the cylinder (Z1), with the exhaust gas pressure ($p_{AG}$) in the cylinder (Z1) during a valve overlap of inlet and outlet valves (30, 31), that are in particular provided with electromechanical actuating mechanisms, causing an internal exhaust gas recirculation, being dependent on

   - an estimate of an exhaust gas pressure ($p_{AG}$) caused by the combustion of an air/fuel mixture in the cylinder (Z1), and

   - a variable that characterises the area centre of gravity of the valve overlap of the inlet and outlet valves (30, 31) being determined, with the area centre of gravity being relative to an area that produces the overlapping valve lifts of the inlet and outlet valves (30, 31) relative the crankshaft angle (KW).

2. Method according to Claim 1, **characterised in that** the estimate of the exhaust gas pressure produced by the combustion of the air/fuel mixture in the cylinder depends on a gas mass flow ($\dot{m}_{zyl}$) in the cylinder (Z1).

3. Method according to one of the preceding claims, **characterised in that** the centre of gravity angle ($\varphi_{VUE,SP}$) of the area centre of gravity of the valve overlap, characterising the area centre of gravity of the valve overlap of the inlet and outlet valves (30, 31) is relative to the crankshaft angle (KW).

4. Method according to Claim 3, **characterised in that** the centre of gravity angle ($\varphi_{VUE,SP}$) depends on a closing angle ($\varphi_{AV,SCH}$) of the outlet valve, the segment ($\varphi_{VUE}$) of the valve overlap and a specified correction value (P).

5. Method according to Claim 4, **characterised in that** the correction value (T) depends on a variable influencing the closing speed or opening speed of the inlet or outlet valves (30, 31).

6. Method according to one of the preceding claims, **characterised in that** a mass flow ($\dot{m}_{AGR}$) resulting from internal exhaust gas recirculation is determined in the induction tract (1) relative to the exhaust gas pressure ($p_{AG}$) and an inlet manifold pressure ($p_s$).

7. Method according to Claim 6, **characterised in that** the mass flow ($\dot{m}_{AGR}$), during valve overlap, resulting from the internal exhaust gas recirculation is determined relative to an average flow cross-section ($\bar{A}_{EV}$) at the inlet valve (30) of the cylinder (Z1).

8. Method according to Claim 7, **characterised in that** the average flow cross-section ($\bar{A}_{EV}$) depends on the segment ($\varphi_{VUE}$) of the valve overlap.

9. Method according to one of Claims 6 to 8, **characterised in that** the mass flow to cylinder (Z1) is determined by means of a dynamic model of the internal combustion engine, relative to the mass flow ($\dot{m}_{AGR}$) resulting from internal exhaust gas recirculation and at least the degree of opening ($\alpha_{DK}$) of a throttle valve (14) in the induction tract (1) and speed (N) of the crankshaft (23) measured variables.

10. Method according to one of the preceding claims, **characterised in that** the exhaust gas pressure ($p_{AG}$) depends on an ambient pressure ($p_0$).

**Revendications**

1. Procédé de commande d'un moteur à combustion interne en fonction d'une pression de gaz d'échappement, avec une ligne d'admission (1), au moins un cylindre (Z1), une ligne de gaz d'échappement (4) et des soupapes d'admission et d'échappement (30, 31), qui sont associées au cylindre (Z1), selon lequel la pression de gaz d'échappement ($p_{AG}$) dans le cylindre (Z1) est déterminée pendant le chevauchement de soupapes, provoquant un recyclage de gaz d'échappement interne, des soupapes d'admission et d'échappement (30, 31) pourvues notamment d'entraînements de réglage électromécaniques, en fonction

   - d'une valeur estimée d'une pression de gaz d'échappement ($p_{AG}$), qui est due à la combustion d'un mélange air/carburant dans le cylindre (Z1), et

- d'une grandeur qui caractérise le barycentre d'aire du chevauchement de soupapes des soupapes d'admission et d'échappement (30, 31), le barycentre d'aire étant rapporté à une surface au moyen de laquelle il se produit des levées de soupape, se chevauchant, des soupapes d'admission et d'échappement (30, 31) rapportées à l'angle de vilebrequin (KW).

2. Procédé suivant la revendication 1, **caractérisé en ce que** la valeur estimée de la pression de gaz d'échappement, qui est due à la combustion du mélange air/carburant dans le cylindre, dépend d'un débit massique de gaz ($\dot{m}_{zyl}$) dans le cylindre (Z1 ).

3. Procédé suivant l'une des revendications précédentes, **caractérisé en ce que** la grandeur, caractérisant le barycentre d'aire du chevauchement de soupapes des soupapes d'admission et d'échappement (30, 31) est l'angle de barycentre ($\varphi_{VUE,SP}$) du barycentre d'aire du chevauchement de soupapes rapporté à l'angle de vilebrequin (KW).

4. Procédé suivant la revendication 3, **caractérisé en ce que** l'angle de barycentre ($\varphi_{VUE,SP}$) dépend d'un angle de fermeture ($\varphi_{AV,SCH}$) de la soupape d'échappement, de l'angle de croisement ($\varphi_{VUE}$) du chevauchement de soupapes et d'une valeur de correction (P) préfixée.

5. Procédé suivant la revendication 4, **caractérisé en ce que** la valeur de correction (T) dépend d'une grandeur influant sur la vitesse de fermeture ou la vitesse d'ouverture des soupapes d'admission ou d'échappement (30, 31).

6. Procédé suivant l'une des revendications précédentes, **caractérisé en ce qu'**un débit massique ($\dot{m}_{AGR}$) résultant d'un recyclage de gaz d'échappement interne est déterminé en fonction de la pression de gaz d'échappement ($p_{AG}$) et d'une pression de tuyauterie d'admission (pS) dans la ligne d'admission (1).

7. Procédé suivant la revendication 6, **caractérisé en ce que** le débit massique ($\dot{m}_{AGR}$) résultant d'un recyclage de gaz d'échappement interne est déterminé en fonction d'une section transversale d'écoulement moyenne ($\bar{A}_{EV}$) à l'endroit de la soupape d'admission (30) du cylindre (Z1) pendant le chevauchement de soupapes.

8. Procédé suivant la revendication 7, **caractérisé en ce que** la section transversale d'écoulement moyenne ($\bar{A}_{EV}$) dépend de l'angle de croisement ($\varphi_{VUE}$) du chevauchement de soupapes.

9. Procédé suivant l'une des revendications 6 à 8, **caractérisé en ce que** le débit massique dans le cylindre (Z1) est déterminé au moyen d'un modèle dynamique du moteur à combustion interne en fonction du débit massique ($\dot{m}_{AGR}$) résultant d'un recyclage de gaz d'échappement interne, et au moins des grandeurs de mesure que sont le degré d'ouverture ($\alpha_{DK}$) d'un papillon des gaz (14) situé dans la ligne d'admission (1) et la vitesse de rotation (N) du vilebrequin (23).

10. Procédé suivant l'une des revendications précédentes, **caractérisé en ce que** la pression de gaz d'échappement ($p_{AG}$) dépend d'une pression environnante ($p_0$).

# FIG 1

FIG 2

# FIG 3

$m_{AGR}(\varphi_{VUE,SP,1}) > m_{AGR}(\varphi_{VUE,SP,2})$

Auslaßventil

Einlaßventil

LW-OT

Ventilhub

SP1

SP2

$\varphi_{EV,oe}$   $\varphi_{AV,SCH}$

KW

EP 1 115 964 B1

# FIG 4